Europäisches Patentamt

(19) European Patent Office (11) Publication number: **0 162 410**

Office européen des brevets **B1**

(12) **EUROPEAN PATENT SPECIFICATION**

(45) Date of publication of patent specification: **15.03.89** (51) Int. Cl.⁴: **B 23 P 11/02**

(21) Application number: **85105948.5**

(22) Date of filing: **17.03.82**

(60) Publication number of the earlier application in accordance with Art. 76 EPC: **0 089 379**

(54) Method of producing multiple-wall, composite tubular structures.

(43) Date of publication of application:
**27.11.85 Bulletin 85/48**

(45) Publication of the grant of the patent:
**15.03.89 Bulletin 89/11**

(84) Designated Contracting States:
**DE FR GB NL SE**

(56) References cited:
**EP-A-0 015 712**
**DE-A-2 919 615**
**US-A-2 975 259**
**US-A-3 241 221**

(73) Proprietor: **KAWASAKI JUKOGYO KABUSHIKI KAISHA**
**1-1 Higashikawasaki-cho 3-chome**
**Chuo-ku Kobe-shi Hyogo-ken (JP)**

(72) Inventor: **Matsui, Shigetomo**
**4-25, Higashiyama-Cho**
**Higashiosaka-Shi Osaka-Fu (JP)**

(74) Representative: **Klunker, Hans-Friedrich, Dr. et al**
**Patentanwälte Klunker . Schmitt-Nilson . Hirsch**
**Winzererstrasse 106**
**D-8000 München 40 (DE)**

## Description

This invention relates generally to the production of composite metal tubes having laminated multiple walls and used for piping in chemical and other plants, as oil and gas well tubings, for oil and gas pipelines, and like pipes.

Among the multiple-wall composite tubes of the character referred to above and known heretofore for transporting fluids such as those containing corrosive substances, there are double-wall pipes in each of which the inner pipe or liner tube is made of a corrosion-resistant material for effective conducting of corrosive fluid, while the outer pipe is designed to provide strength to withstand internal pressures and external forces. For example, there is a double-wall pipe comprising a stainless-steel inner pipe and a carbon-steel outer pipe in which the inner pipe is fitted.

Among the known methods of producing such composite pipes, the shrink-fit method and other tube heating and expanding methods have been developed. In these methods, in general, the inner pipe is inserted into the outer pipe and expanded while the outer pipe is heated, the outer pipe thereafter being cooled and shrunk thereby to obtain a tight or interference fit between the two pipes.

In a known tube heating and expanding method, (EP—A—0 015 712) a considerably large-scale heating device comprising a large number of heating elements or the like must be provided on the outer side of the outer tube, whereby the required equipment becomes disadvantageously large and expensive. Another difficulty arises in the case of tubes of long length in that the weight of the apparatus and equipment becomes great, whereby the operation and maintenance thereof become troublesome.

Still another problem encountered in the prior art is the possibility of cracking, implosion, and the like occurring in multiple-wall composite tubes during use because of insufficient degree of interference fit between the constituent tubes.

According to this invention there is provided a method of producing multiple-wall composite tubes; wherein an inner tube is inserted into an outer tube; heat is applied from the outside to the outer tube by heating means so as to establish a locally heated zone of the outer tube, the locally heated zone being caused to travel from one end to the other end of the outer tube; radially-inward constrictive pressure is applied to the outer surface of the outer tube by a mechanical deformation means which travels progressively from one end to the other end of the outer tube, following said travelling locally heated zone, to cause the outer tube to undergo plastic deformation in radial constriction; and the tubes are thereafter permitted to obtain ambient temperature, characterized in that the locally heated zone of the outer tube is established substantially around the circumference thereof; that said radially-inward constrictive pressure is applied by a die which encircles the outer surface of the outer tube; and that radially-outward expansion pressure is applied to the inner tube mechanically by a mandrel which is drawn forcibly through the inner tube from one end to the other end of the same in substantially the same transverse plane as said die so as to expand the inner tube plastically into tight contact with the outer tube backed up by said die.

A method according to the precharacterizing part of the preceding paragraph is known from US—A—3 241 221. With this method, the outer and inner tubes are rotated about their common longitudinal axis. The heating means apply heat to a small local area of the outer tube and the deformation means exert radial pressure on a small local area of the outer tube, a progressive spiral path along the tubes of the local areas of heating and subsequent deformation being formed by the rotation of the tubes and a simultaneous axial movement of the heating means and the deformation means. The inner tube is not expanded. It is further known to produce multiple composite tubes by moving a ring shaped heating means along the tubes and exerting expanding fluid pressure in the inner tube (US—A—2 975 259). The tubes are not subjected to the combined effect of a constricting outer hollow die and of an expanding inner mandrel.

By the method according to the invention, multiple-wall composite tubes of excellent characteristics may be produced in an efficient, accurate, and economical way.

The nature, utility, and further features of this invention will be more clearly apparent from the following detailed description with respect to preferred embodiments of the invention when read in conjunction with the accompanying drawings, in which:

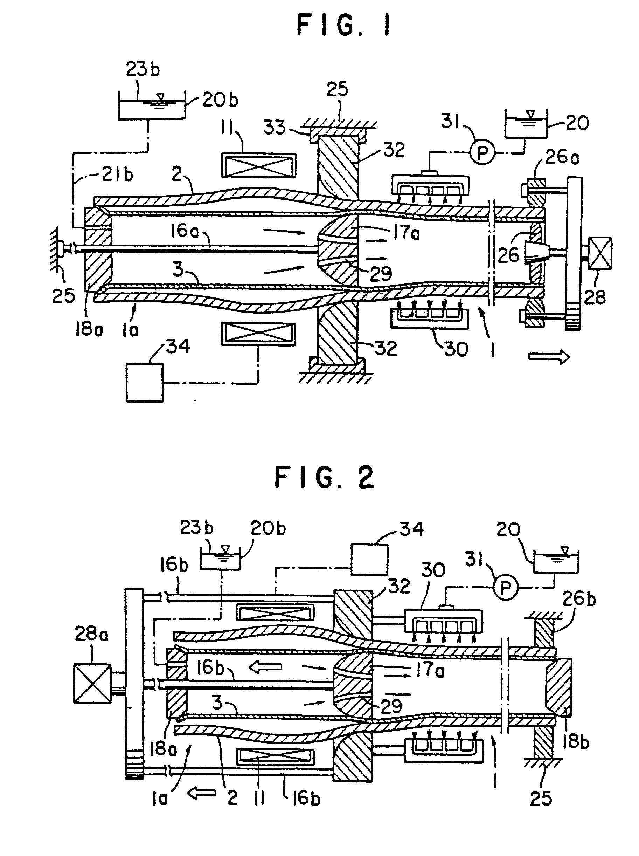

FIGS. 1 and 2 are side views respectively indicating modes of practice of the method of the invention, in each of which a die is used in conjunction with a mandrel.

In an embodiment of this invention as illustrated in FIGS. 1 and 2, a die 32 for acting on the outer surface of an outer tube 2 is used in addition to a mandrel 17a for operating cooperatively therewith. In the example shown in FIG. 1, an inner tube 3 is closed at its two ends, filled with cooling water and caused to shrink in diameter, and inserted into an outer tube 2 of large diameter at atmospheric temperature thereby to form tentatively a composite tube, and the cooling water is then drained out of the inner tube 3.

Then, into one end of the inner tube 3 in the composite tube 1a prepared in this manner, a mandrel 17a of a diameter greater by a specific amount than the inner diameter of the inner tube 3 is forcibly inserted. At the same time, a die 32 is forcibly pressed onto the outer tube 2. The mandrel 17a is fixed by way of a connecting rod 16a to a stationary frame part 25, while the die 32 is fixed to a stationary frame part 25 by way of a bracket 33.

In front of the die 32, an annular induction heating device 11 connected to a control device 34 is installed to encircle the outer tube 2. At the same time, a cooling device 30 supplied with cooling water from a cooling water source 20 by way of a pump 31 is provided behind the die 32 to encircle the outer tube 2.

Furthermore, a seal clamp device 26, 26a is attached to the rear end of the tubes and is coupled to a drawing device 28 such as a pinion-and-rack mechanism. Tap water 23b is supplied from a tap water source 20b through a flexible conduit 21b and a seal cap 18a, through which the above mentioned rod 16a is passed in a sealing state, to fill the interior of the inner tube 3, which is thereby cooled.

The mandrel 17a is provided with through passage holes 29 for free passage of the tap water from the front side to the rear side of the mandrel within the inner tube 3.

Then, when the drawing device 28 is operated to draw the composite tube 1a toward the right as viewed in FIG. 1, the inner tube 2 at its region acted upon by the mandrel 17a is mechanically expanded by it, since the mandrel and the die 32 are fixed in position, and yields to undergo plastic deformation along a stress-strain curve. On the other hand, the outer tube 2, which has been heated and expanded in diameter by the heating device 11 in front of the die 32, is subjected to a mechanical confining force by the die and is integrally fitted onto the inner tube 3. The outer tube 2 is then immediately cooled and shrunk by the cooling water from the cooling device 30, while the inner tube 2 is relieved of the expanding force and, in a tightly fitted state with the outer tube 2, is drawn rearward.

By this operation wherein the composite tube 1a is drawn in this manner as it is heated, worked mechanically, and cooled, a tightly joined double-wall tube 1 is finally obtained. After the entire composite tube has been thus processed, the seal cap 18a is removed to discharge the water 23b out of the composite tube 1, which is then drawn away from the mandrel 17a and the die 32. By being removed from the seal clamp device 26, 26a the composite tube is exposed to the atmosphere, and the outer tube is cooled to the atmospheric temperature, whereby its shrinking in diameter is promoted. On the other hand, the inner tube 3 is no longer cooled by the water 23b, and its temperature therefore rises to the atmospheric temperature, whereby its increase in diameter is promoted. As a result of these two additive effects, an even greater interference fit is obtained, and a double-wall tube of tubes in a strongly joined state is finally produced.

In the above described example, the double-wall composite tube is produced by drawing the tube past the mandrel, die, and heating and cooling devices. In a modification of this mode of practice, as shown in FIG. 2, the heating device 11, the mandrel 17a, the die 32, and the cooling device 30 are coupled by way of rods 16b to a forward drawing device 28a, while the composite tube 1a sealed at its ends by seal caps 18a and 18b and filled with water 23b is fixed to a stationary frame part 25 by a clamp device 26b. Thus, the die 32 and the mandrel 17a, as well as the heating device 11 and the cooling device 30, are caused to travel relative to the composite tube 1a. The operational effectiveness of this arrangement is substantially the same as that of the preceding example.

It will be apparent that various modifications of the above described two examples are possible within the scope of this invention. For example, the entire front part of the outer tube may be heated; the heating device may be of the steam heated type; and the cooling water within the inner tube may be forced-fed cooling water.

According to the above described modes of practice of the invention as illustrated in FIGS. 1 and 2, the inner tube inserted into the outer tube by a measure such as cooling is filled with cooling water, and a mandrel is placed in contact in a tube expanding state against the inner surface of the inner tube, while a die is placed in a confining or squeezing state against the outer surface of the outer tube, whereby fundamentally, the inner tube is mechanically expanded while the outer tube is mechanically constricted. As a result, the two effects have an additive effect of producing an interference fit between the inner and outer tubes as they are moved relative to the mandrel and the die.

Furthermore, since the inner tube is cooled, and the outer tube before passing by the die is heated and expanded, the outer tube at the time of passing by the mandrel and die is forcibly shrunk prior to the cooling and shrinking after this passing by and is tightly fitted against the inner tube of expanded diameter. The outer tube is thus subjected to the three shrinking steps of constriction by the die, forcible cooling and shrinking, and shrinking due to natural cooling. These effects combined with the increase in diameter of the inner tube due to natural temperature rise after plastic deformation thereof result in a very strong interference fit between the tubes.

Another advantageous feature of this mode of practice of the invention is that, since it is necessary to heat only one portion of the outer tube during the production of long lengths of the composite tube, the heating means and measure are relatively simple. Moreover, tap water is sufficient for cooling the inner tube. Accordingly, the simple apparatus suffices, and the production costs can be kept low. The invention can also be applied to the production of composite tubes formed from more than two tubes.

## Claims

1. A method of producing multiple-wall composite tubes; wherein an inner tube (3) is inserted into an outer tube (2); heat is applied from the outside to the outer tube (2) by heating means (11) so as to establish a locally heated zone of the outer tube (2), the locally heated zone being caused to travel from one end to the other end of the outer tube (2); radially-inward constrictive pressure is applied to the outer surface of the outer tube (2) by a mechanical deformation means (32) which travels progressively from one end to the other end of the outer tube (2), following said travelling locally heated zone, to cause the outer tube (2) to undergo plastic deformation in radial constriction; and the tubes (2, 3) are thereafter permitted to obtain ambient temperature, characterized in that the locally heated zone of the outer tube (2) is established substantially around the circumference thereof; that said radially-inward constrictive pressure is applied by a die (32) which encircles the outer surface of the outer tube (2); and that radially-outward expansion pressure is applied to the inner tube (3) mechanically by a mandrel (17a) which is drawn forcibly through the inner tube (3) from one end to the other end of the same in substantially the same transverse plane as said die (32) so as to expand the inner tube (3) plastically into tight contact with the outer tube (2) backed up by said die (32).

2. A method of producing multiple-wall composite tubes according to claim 1, wherein the heating means (11), the die (32) and mandrel (17a) are stationary, and the outer and inner tubes (2, 3) are moved relative to said stationary members.

3. A method of producing multiple-wall composite tubes according to claim 1, wherein the outer and inner tubes (2, 3) are stationary, and the heating means (11), the die (32) and the mandrel (17a) are moved relative to the outer and inner tubes.

4. A method of producing multiple-wall composite tubes according to any of the claims 1 to 3, wherein the outer tube (2) is cooled after the outer tube has been applied with the radially-inward constrictive pressure by said die (32), the outer tube (2) being cooled in a second local zone travelling in synchronism with the mandrel (17a).

5. A method of producing multiple-wall composite tubes according to claim 4, wherein the second local zone is produced by liquid at low temperature supplied onto the outer surface of the outer tube (2) from cooling means (30) encircling the outer tube at a position rear to the die (32) with respect to the direction of relative travel thereof.

6. A method of producing multiple-wall composite tubes according to any of the claims 1 to 5, wherein the inner tube (3) is cooled.

7. A method of producing multiple-wall composite tubes according to claim 6, wherein the inner tube (3) is cooled by supplying liquid at low temperature into the inner tube.

**Patentansprüche**

1. Verfahren zum Herstellen mehrwandiger zusammengesetzter Rohre; bei dem ein Innenrohr (3) in eine Außenrohr (2) eingeführt wird; Wärme von außen der durch eine Heizeinrichtung (11) auf das Außenrohr (2) aufgebracht wird, um dadurch eine lokal erwärmte Zone des Außenrohrs (2) zu schaffen, wobei die lokal erwärmte Zone dazu veranlaßt wird, von dem einen Ende des Außenrohrs (2) zu dessen anderem Ende zu wandern; radial nach innen gerichteter Verengungsdruck auf die Außenfläche des Außenrohrs (2) durch eine mechanische Verformungseinrichtung (32) ausgeübt wird, die anschließend an die wandernde erwärmte Zone fortschreitend von dem einen Ende des Außenrohrs (2) zu dessen anderem Ende wandert, um das Außenrohr (2) dazu zu veranlassen, eine plastische Verformung in Richtung radialer Verengung auszuführen; und bei dem es den Rohren (2, 3) danach gestattet wird, Umgebungstemperatur anzunehmen, dadurch gekennzeichnet, daß die lokal erwärmte Zone des Außenrohrs (2) im wesentlichen um dessen Umfang herum erzeugt wird; daß der radial nach innen gerichtete Verengungsdruck durch eine Formeinrichtung (32) ausgeübt wird, die die Außenfläche des Außenrohrs (2) umschließt; und das radial nach außen gerichteter Expansionsdruck auf das Innenrohr (3) durch einen Dorn (17a) mechanisch ausgeübt wird, der unter Kraftaufwendung von dem einen Ende des Innenrohrs (3) zu dessen anderem Ende in im wesentlichen derselben Querebene wie die Formeinrichtung (32) durch das Innenrohr (3) gezogen wird, um das Innenrohr (3) in enge Berührung mit dem durch die Formeinrichtung (32) gestützten Außenrohr (2) plastisch aufzuweiten.

2. Verfahren zum Herstellen mehrwandiger zusammengesetzter Rohre nach Anspruch 1, dadurch gekennzeichnet, daß die Heizeinrichtung (11), die Formeinrichtung (32) und der Dorn (17a) stationär sind und das Außenrohr und das Innenrohr (2, 3) relativ zu diesen stationären Elementen bewegt werden.

3. Verfahren zum Herstellen mehrwandiger zusammengesetzter Rohre nach Anspruch 1, dadurch gekennzeichnet, daß das Außenrohr und das Innenrohr (2, 3) stationär sind und die Heizeinrichtung (11), die Formeinrichtung (32) und der Dorn (17a) relativ zu dem Außenrohr und dem Innenrohr bewegt werden.

4. Verfahren zum Herstellen mehrwandiger zusammengesetzter Rohre nach einem der Ansprüche 1 bis 3, dadurch gekennzeichnet, daß das Außenrohr (2) abgekühlt wird, nachdem der nach innen gerichtete Verengungsdruck durch die Formeinrichtung (32) auf das Außenrohr ausgeübt worden ist, wobei das Außenrohr (2) in einer synchron mit dem Dorn (17a) wandernden zweiten lokalen Zone abgekühlt wird.

5. Verfahren zum Herstellen mehrwandiger zusammengesetzter Rohre nach Anspruch 4, dadurch gekennzeichnet, daß die zweite lokale Zone durch Flüssigkeit mit niedriger Temperatur erzeugt wird, die von einer Kühleinrichtung (30) auf die Außenfläche des Außenrohrs (2) geleitet wird, wobei die Kühleinrichtung das Außenrohr an einer Stelle umgibt, die sich in bezug auf die Relativbewegungsrichtung der Formeinrichtung (32) hinter der Formeinrichtung (32) befindet.

6. Verfahren zum Herstellen mehrwandiger zusammengesetzter Rohre nach einem der Ansprüche 1 bis 5, dadurch gekennzeichnet, daß das Innenrohr (3) abgekühlt wird.

7. Verfahren zum Herstellen mehrwandiger zusammengesetzter Rohre nach Anspruch 6, dadurch gekennzeichnet, daß das Innenrohr (3) durch Einleiten von Flüssigkeit mit niedriger Temperatur in das Innenrohr abgekühlt wird.

**Revendications**

1. Un procédé de fabrication de tubes composites à plusieurs parois; suivant lequel on introduit un tube interne (3) dans un tube externe (2); on applique de la chaleur, de l'extérieur, au tube externe (2), par des moyens de chauffage (11), de façon à créer une zone chauffée localement du tube externe (2), la zone chauffée localement étant amenée à se déplacer d'une extrémité à l'autre extrémité du tube externe (2); on applique une pression de contraction dirigée radialement vers l'intérieur, sur la surface externe du tube externe (2), par un moyen de déformation mécanique (32) qui se déplace progressivement d'une extrémité à l'autre extrémité du tube externe (2), en suivant ladite zone chauffée localement en déplacement, pour amener le tube externe (2) à subir une déformation plastique en contraction radiale; et on laisse ensuite les tubes (2, 3) revenir à la température ambiante, caractérisé en ce qu'on crée la zone chauffée localement du tube externe (2) sensiblement autour de la circonférence de celui-ci; qu'on applique ladite pression de contraction dirigée radialement vers l'intérieur à l'aide d'une matrice (32) qui entoure la surface externe du tube externe (2); et qu'on applique une pression de dilatation dirigée radialement vers l'extérieur, au tube interne (3), de façon mécanique, à l'aide d'un mandrin (17a) qui est tiré de façon forcée à travers le tube interne (3), d'une extrémité à l'autre extrémité de ce dernier, sensiblement dans le même plan transversal que ladite matrice (32), de manière à dilater le tube interne (3) de façon plastique pour l'amener en contact serré avec le tube externe (2) supporté par ladite matrice (32).

2. Un procédé de fabrication de tubes composites à plusieurs parois, selon la revendication 1, suivant lequel les moyens de chauffage (11), la matrice (32) et le mandrin (17a) sont fixes, et les tubes externe et interne (2, 3) sont déplacés relativement auxdits éléments fixes.

3. Un procédé de fabrication de tubes composites à plusieurs parois, selon la revendication 1, suivant lequel les tubes externe et interne (2, 3) sont fixes, et les moyens de chauffage (11), la matrice (32) et le mandrin (17a) sont déplacés relativement aux tubes externe et interne.

4. Un procédé de fabrication de tubes composites à plusieurs parois, selon l'une des revendications 1 à 3, suivant lequel on refroidit le tube externe (2), après qu'on lui a appliqué la pression de contraction dirigée radialement vers l'intérieur à l'aide de ladite matrice (32), le tube externe (2) étant refroidi dans une seconde zone locale se déplaçant en synchronisme avec le mandrin (17a).

5. Un procédé de fabrication de tubes composites à plusieurs parois, selon la revendication 4, suivant lequel on réalise la seconde zone locale par du liquide à basse température appliqué sur la surface externe du tube externe (2), à partir de moyens de refroidissement (30) entourant le tube externe au niveau d'une position à l'arrière de la matrice (32) par rapport à la direction de son déplacement relatif.

6. Un procédé de fabrication de tubes composites à plusieurs parois, selon l'une des revendications 1 à 5, suivant lequel on refroidit le tube interne (3).

7. Un procédé de fabrication de tubes composites à plusieurs parois, selon la revendication 6, suivant lequel on refroidit le tube interne (3) en introduisant dans le tube interne du liquide à basse température.

# FIG. 1

# FIG. 2

1